(19) **Europäisches Patentamt / European Patent Office / Office européen des brevets**

(11) **EP 2 118 518 B1**

(12) **EUROPEAN PATENT SPECIFICATION**

(45) Date of publication and mention
of the grant of the patent:
**22.12.2010 Bulletin 2010/51**

(21) Application number: **08728983.1**

(22) Date of filing: **05.02.2008**

(51) Int Cl.:
*F16H 1/00* (2006.01)  *B60N 2/02* (2006.01)
*B60S 1/26* (2006.01)  *E05F 15/16* (2006.01)
*F16H 1/06* (2006.01)

(86) International application number:
**PCT/US2008/052981**

(87) International publication number:
**WO 2008/097935 (14.08.2008 Gazette 2008/33)**

(54) **IRREVERSIBLE TRANSMISSION DEVICE**

NICHT UMKEHRBARE ÜBERTRAGUNGSVORRICHTUNG

DISPOSITIF DE TRANSMISSION IRRÉVERSIBLE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.02.2007 FR 0700868**

(43) Date of publication of application:
**18.11.2009 Bulletin 2009/47**

(73) Proprietor: **ITW SMPI**
**74300 Cluses (FR)**

(72) Inventors:
• **RICHARD, Didier**
**F-74970 Marignier (FR)**
• **KAZKAZ, Ghaffar**
**Rolling Meadows, IL 60008 (US)**

(74) Representative: **Schouller, Jean-Philippe et al**
**Cabinet Lavoix**
**62, rue de Bonnel**
**69448 Lyon Cedex 03 (FR)**

(56) References cited:
**EP-A- 0 362 682     DE-A1- 10 350 934**

## Description

The present invention relates to an irreversible geared motion transmitting device, further to electrical apparatus fitted with at least one such transmission device, and also to a motor vehicle fitted with at least one such electric apparatus.

Such transmission devices are used in different electrical apparatus, in particular those used in motor vehicles.

In such applications said electrical apparatus illustratively are in the form of a window drive, a seat moving drive, or also a windshield wiper. When integrated into an electric window drive, such transmission device is situated between an electric motor and a control driving the window pane.

The present invention also applies to electrical apparatus used outside the automotive industry. Illustratively these are window-blind drives, electrical household appliances, also portable electric tools.

Conventionally a geared motion transmitting device comprises two toothed elements, namely a gear wheel and a pinion. In general the gear wheel comprises more teeth than the pinion.

Typically a gear system transmits motion in both directions, i.e. reversibly. In other words, rotating one of the toothed elements, whether gear wheel or pinion, causes a related rotation of the other, namely the gear wheel or the pinion. This reversibility exists regardless of the direction of rotation and regardless of the friction between the teeth.

It is the object of the present invention to create a device allowing irreversible transmission of the motions between a drive means, or input means and a driven means, or output means. It follows that rotating the input means generates a corresponding motion of the output means whereas, when the output means is being rotated, the input means does not rotate significantly. Such irreversibility cannot be provided by the gear systems of the state of the art.

In order to design such an irreversible transmission device, it is known to use a worm cooperating with a tangent gear wheel of which the teeth are fitted in its rim. Such a speed reducer is irreversible if the worm's helical thread angle is less than the friction angle between the toothings. In this design, if the worm is driving, i.e. if it is the input means, the gear wheel shall rotate, whereas, if the gear wheel is driving, the worm will not rotate.

However this known design does entail some drawbacks which in particular relate to the low efficiencies of the gearing involved. Accordingly this design requires powerful motors which are expensive per se and operate at high energy costs.

Moreover the worm is a machined workpiece, hence costly. Also the axial stress at the end of the work is high, entailing high quality and hence expensive, axial stops

Besides, the closest prior art document DE-A- 103 50 934 discloses two gears which are integral with respective shafts. When teeth are driven in a first direction, they are free to move in rotation. Driving of these wheels in the opposite direction stops the rotation. Consequently, the irreversibility comes from the fact that it is not possible to drive the wheels in rotation in a given direction.

Therefore it is the object of the present invention to create a geared motion transmission device which is both irreversible and allows bypassing the above cited drawbacks inherent in a worm/ gear-wheel systems.

The objective of the present invention therefore is a geared motion transmission means comprising a casing which supports an input shaft and an output shaft, one end of the input shaft being fitted with a pinion whereas one end of the output shaft is fitted with a gear wheel, said pinion and gear wheel constituting a gear unit that is **characterized in that** said gear wheel and pinion are designed appropriately so that, during operation, rotating the pinion in either direction will generate an effective force both passing a distance from the gear-wheel center and commensurately rotating this gear wheel, whereas rotating the gear wheel in either direction applies a force to the pinion near its center and thereby fails to commensurately rotate this pinion.

The present invention comprises further features:

-- the ratio of the outside pinion diameter to the base pinion diameter is larger than 6, preferably larger than 10,

-- the ratio of the outside gear wheel diameter to the base gear wheel diameter is less than 4, preferably less than 3,

-- the pinion comprises one or two teeth,

-- the number of gear wheel teeth is larger than 15, preferably larger than 20,

-- the common transverse pressure angle of gear wheel and pinion is larger than 45°, preferably larger than 60°,

-- the profile shift coefficient of the pinion is larger than (+1+, preferably larger than (+2).,

-- the profile shift coefficient of the gear wheel is less than (-1), preferably less than (-2).

Another object of the present invention is electrical apparatus, in particular a car window drive, a car seat moving device drive or a windshield wiper, **characterized in that** this apparatus is fitted with at least one geared irreversible motion transmission device such as defined above.

Lastly another object of the present invention is a motor vehicle fitted with at least one electrical apparatus as defined above.

The invention is elucidated below in relation to the appended drawings which are strictly illustrative, not limiting:

Figs. 1, 2 are schematic views of a transmission device of the invention in two different positions,

Figs. 3, 4 are respectively a front view and a perspective which illustrate a gear system of the transmission device of the invention,

Fig. 5 is a front view similar to Fig. 3 and illustrates the pinion rotating the gear wheel of the pinion-and-gearwheel system,

Fig. 6 is a front view similar to Fig. 3 illustrating locking the pinion when the gear wheel is rotated, and

Fig. 7 is a view on a larger scale of Fig. 6.

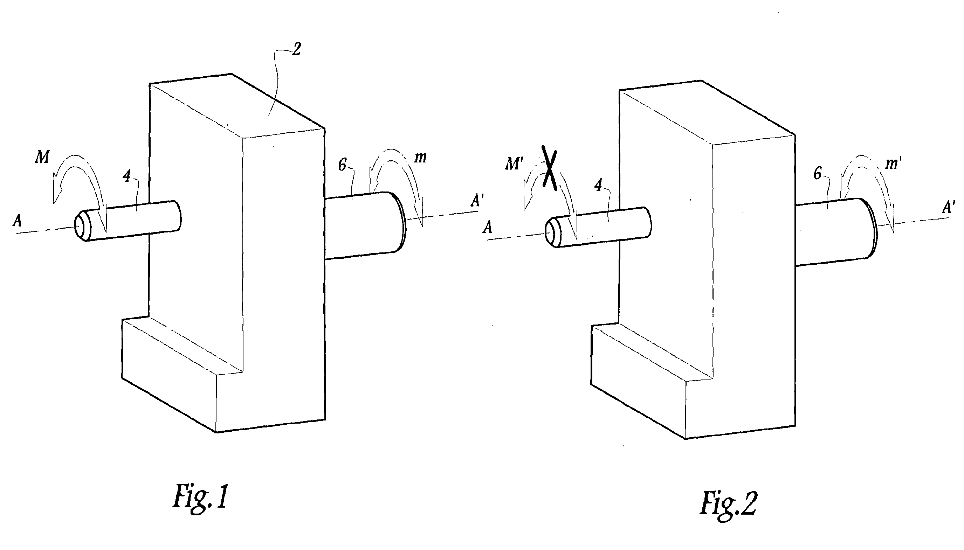

The transmission device of the invention schematically shown in Figs. 1 and 2 is used for instance in a car's window drive. However it may be integrated into other kinds of electrical apparatus, for motor vehicles or other applications.

This device comprises a massive, stationary casing 2 supporting an input shaft 4 and an output shaft 6. Motions are transmitted between these two shafts 4 and 6 by a gear unit inside said casing 2 and therefore not visible in these Figs. 1 and 2, the said unit shall be elucidated below in relation to the following Figures.

The input shaft 4 is driven by a conventional rotating motor omitted from the Figures whereas the output shaft 6 is rigidly joined to a control means of the body to be displaced, illustrative a car's window drive. In the illustration of Figs. 1 and 2, the shafts 4 and 6 subtend axes A and A' respectively which are both parallel to and distinct from each other.

This transmission device of the invention is irreversible. As shown in Fig 1, when the input shaft 4 is rotating in either direction, as indicated by the arrow M, the output shaft 6 also will be driven into rotation along the double arrow m. On the other hand, as shown in Fig. 2, when the output shaft is driven into rotation m', any resultant rotation of the input shaft 4 is insignificant as indicated by the crossed-out double arrow M'.

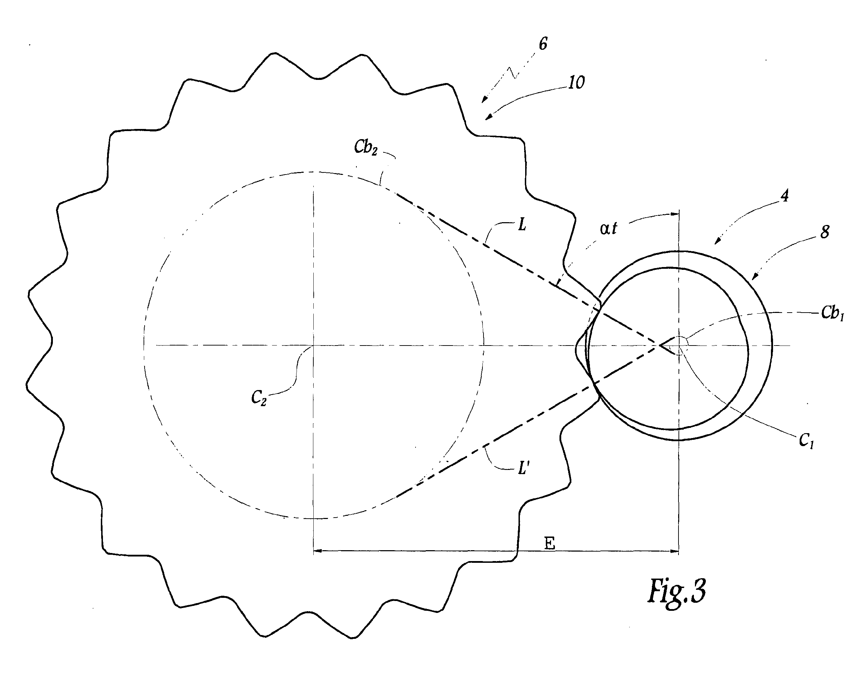

In Fig. 3, the ends of the shafts 4 and 6 that may engage each other are respectively fitted with a pinion 8 and a gear wheel 10 that together constitute a gear unit. Said pinion and gear wheel bear outer cylindrical teeth designed with a contour forming a circular involute as used most widely in gear technology.

The different geometric features of said gear wheel and pinion are discussed below in illustrative and non-limiting manner:

Let $C_1$ and $C_2$ respectively be the center of the pinion 8 and the center of the gear wheel 10, situated on the axes A and A', then the center distance E between these axes will be 18.37 mm. Also the transverse modulus relating to the pinion 8 and to the gear wheel 10 is mt = 1.75.

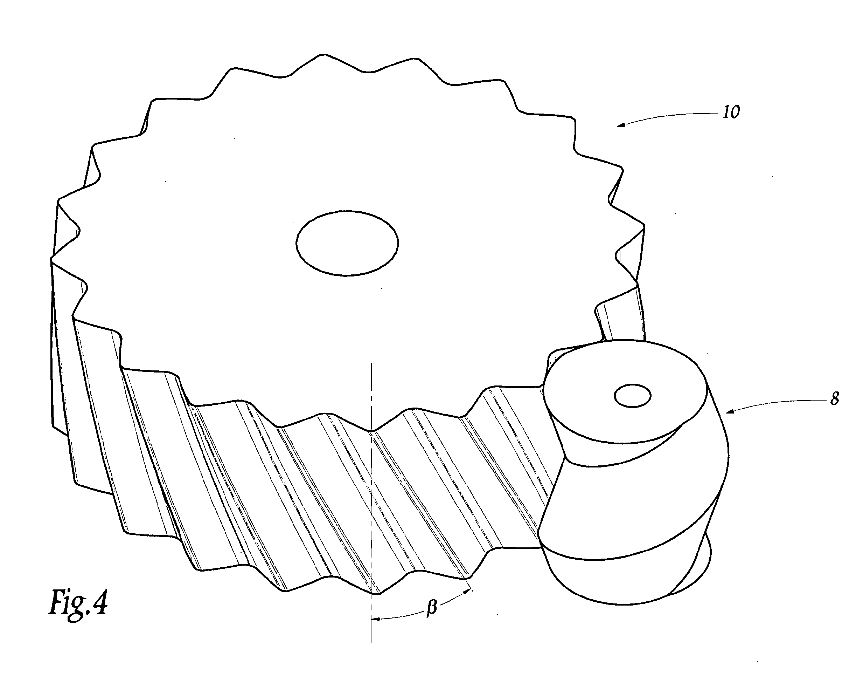

As shown in further detail in Fig. 4, sad gear wheel and pinion are fitted with a helical toothing having a helix angle $\beta = 30°$. The common transverse pressure angle of said gear wheel and pinion is at = 60° (Fig. 3).

Moreover the pinion 8 comprises:

a number of teeth $Z_1 = 1$.

an profile shift coefficient $x_1 = +2$,

an outside diameter $da_1 = 9.34$ mm,

a root diameter $df_1 = 6.58$ mm and

a base diameter $db_1 = 0.87$ mm.

The formula for the base diameter is given by

$$db = mt \cdot Z \cdot \cos(\alpha t).$$

Moreover the gear wheel 10 comprises:

a number of teeth $Z_2 = 20$,

an profile shift $x_2 = -2$,

an outside diameter $da_2 = 29.2$ mm,

a root diameter $df_2 = 26.4$ mm and

a base diameter $db_2 = 17.50$ mm.

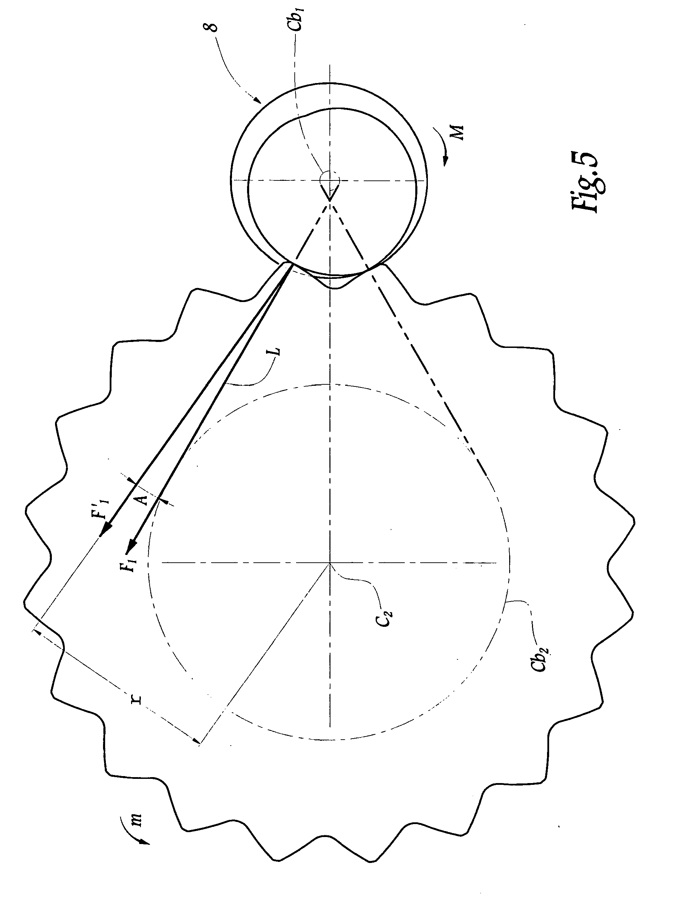

The action lines L and L' are shown in Fig. 3 and are known per se to be the tangents to the two base circles $Cb_1$ and $Cb_2$ having the above defined base diameters. As shown in Fig. 5, when the pinion 8 is rotating in the direction of the arrow M, a theoretical force $F_1$ is generated along the line of action L in the idealized frictionless case. If a friction-caused angle A is assumed, the actual force $F'_1$ is situated offset by the same angle from the line of action.

Be it borne in mind that in the above scenario, the offset of the actual force from the line of action L is generated by deviating from the gear wheel axis because the friction opposes the motion between the two surfaces making contact with each other, whereas the meshing takes place in a recess contact zone of the toothings. The concept of a gear recess and that of gear approach has been treated for instance in G. Henriot's "Traité théorique et pratique des engrenages" [Theory and Practice of Gears], Dunod. publishers. Under these conditions the torque applied by the pinion is given by $C_1 = |F'_1| * r$, were $|F'_1|$ is the magnitude of the force $F'_1$.

Consequently regardless of friction magnitude, the gear wheel is subjected to a positive torque generating the rotation in the direction of the arrow m.

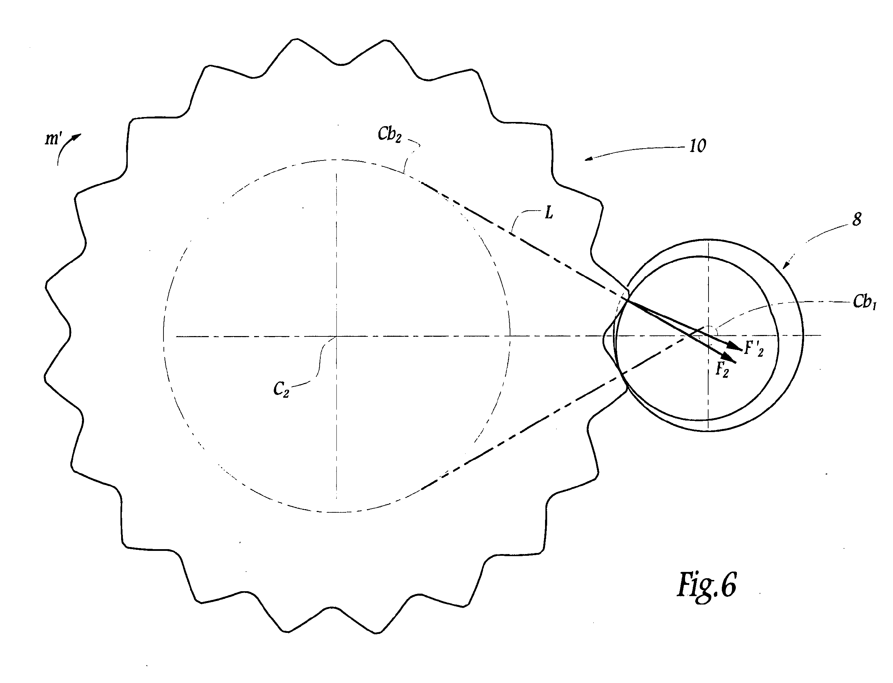

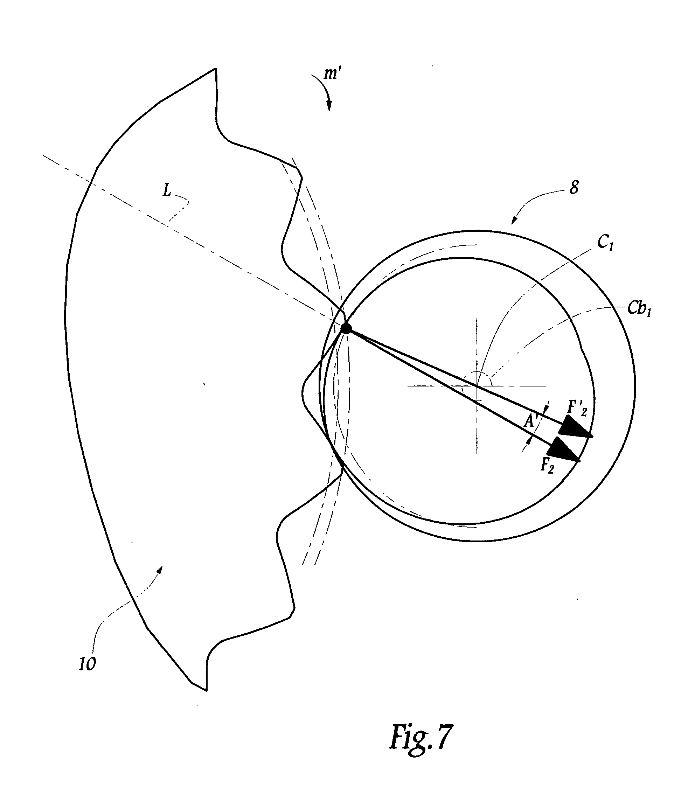

When the gear wheel 10 is rotated in the direction of the arrow m' as shown in Figs. 6 and 7, a theoretical force $F_2$ in the direction of the line of action L. However if friction causing an offset angle A' is taken into account, there will be a corresponding force offset along this same angle A'.

Be it borne in mind that contrary to discussion above relating the forces $F_1$ and $F'_1$, the offset of the force $F_2$ occurs while moving closer to the pinion axis: the friction opposes the motion between the two contact surfaces whereas meshing henceforth takes place exclusively in the toothings' approaching zone.

Under these conditions, if the friction angle is large enough, the effective force $F'_2$ passes through the pinion center $C_1$, even at the opposite side of said center relative to the line of action.

In that case the rotational torque is zero when the force passes through the center or else negative if on the other side of the center. As a result, the gear system jams and becomes irreversible.

As discussed above, such irreversibility is attained in the invention by offsetting the effective force $F'_2$ toward the pinion center to cancel or even make negative the corresponding torque.

In this light it is advantageous that the ratio $R_1$ of the outside diameter $da_1$ to the base diameter $db_1$ of the pinion 8 be especially high. Illustratively this ratio $R_1$ is larger than 6, preferably larger than 10.

Consequently it is also advantageous on the other hand that the ratio $R_2$ of the outside diameter $da_2$ to the base diameter $db_2$ of the gear wheel shall be relatively small. Illustratively said ratio $R_2$ shall be less than 4 and preferably less than 3.

Also advantageously the number of teeth $Z_1$ of the pinion 8 is very small, for instance being 1 or 2 teeth.

Again it is equally advantageous in this respect that the number of teeth $Z_2$ of the gear wheel 10 be comparatively large, for instance larger than 15, and preferably larger than 20.

Moreover the pressure angle $\alpha t$ common to the pinion 8 and the gear wheel 10 advantageously shall be large, for instance being more than 45, preferably more than 60°.

Again the profile shift coefficient $x_1$ of the pinion 8 advantageously shall be positive and large, for instance being larger than +1, preferably larger than +2.

Again in this light, the profile shift coefficient $x_2$ of the gear wheel 10 on the other hand advantageously shall be negative while its absolute value is high, whereby this profile shift coefficient illustratively shall be smaller than -1, preferably smaller than -2.

The present invention meets the above cited objectives:

The irreversible gear system of the present invention offers higher efficiency than those of the state of the art. Be it noted in this respect that an irreversible reducer making use of a gear wheel and a worm offers an efficiency at most 30 % approximately. An irreversible reducer using an epicyclical power train offers a maximum efficiency of about 20 %.

On the other hand, a substantial gain in efficiency is offered by the present invention relative to the known designs.

Be it also borne in mind that the gear system of the invention can be manufactured in comparatively simple manner using standard tool means. Its teeth may be made by conventional shaping. The gear system of the present invention also may be manufactured in many different materials, for instance in plastics, by powder sintering, or other ways.

The solution/design of the present invention is applicable to different kinds of gear systems. Without implying restriction, among these are the cylindrical helical gear systems having parallel axes and also helical gear systems with pinion and rack. In the latter case, the rack is construed being a gear wheel with an infinite number of teeth.

**Claims**

1. An irreversible motion transmitting gear device comprising a casing (2) supporting an input means (4) and an output means (6), one end of the input means being fitted with a pinion (8) whereas one end of the output means is fitted with a gear wheel (10), said pinion and said gear wheel constituting a gear system,
   **characterized**
   **in that** said gear wheel and pinion are designed in a manner that in operation the pinion rotation in either direction generates an effective force ($F'_1$) transmitted along a path a distance away from the gear wheel center ($C_2$) in order to correspondingly rotate said gear wheel, whereas gear wheel rotation in either direction generates an effective force ($F'_2$) situated near the pinion center ($C_1$) in a way not to generate a corresponding pinion rotation.

2. Device as claimed in claim 1, **characterized in that** the ratio ($R_1$) of the outside diameter ($da_1$) to the base diameter ($db_1$) of the pinion (8) is larger than 6, preferably larger than 10.

3. Device as claimed in either of claims 1 and 2, **characterized in that** the ratio ($R_2$) of the outside diameter ($da_2$) to the base diameter ($db_2$) of the gear

wheel (10) is less than 4, preferably less than 3.

4. Device as claimed in any of the above claims, **characterized in that** the number of teeth ($Z_1$) of the pinion (8) is 1 or 2.

5. Device as claimed in any of the above claims, **characterized in that** the number of teeth ($Z_2$) of the gear wheel (10) is larger than 15, preferably larger than 20.

6. Device as claimed in any of the above claims, **characterized in that** the transverse pressure angle ($\alpha t$) common to the gear wheel (10) and the pinion (8) is larger than 45, preferably larger than 60°.

7. Device as claimed in any of the above claims, **characterized in that** the pinion (8) has an profile shift coefficient ($x_1$) larger than (+1), preferably larger than (+2).

8. Device as claimed in any of the above claims, **characterized in that** the profile shift coefficient ($x_2$) of the gear wheel (10) is less than (-1), preferably less than (-2).

9. Electrical apparatus, in particular a window drive, a seat displacement drive or a windshield wiper, **characterized by** comprising at least one geared irreversible motion transmitting device claimed in any of the above claims.

10. Motor vehicle comprising at least one electrical apparatus defined in the preceding claim.


**Patentansprüche**

1. Nicht umkehrbare Bewegungsübertragungsgetriebevorrichtung mit einem Gehäuse (2), das ein Eingangsmittel (3) und ein Ausgangsrrittel (6) stützt, wobei ein Ende des Eingangsmittels mit einem Ritzel (8) versehen ist, während ein Ende des Ausgangsmittels mit einem Zahnrad (10) versehen ist, wobei das Ritzel und das Zahnrad ein Getriebesystem bilden,
**dadurch gekennzeichnet, dass**
das Zahnrad und das Ritzel so ausgelegt sind, dass im Betrieb durch die Ritzeldrehung in jeder Richtung eine effektive Kraft ($F'_1$) erzeugt wird, die entlang einem Weg in einem Abstand von der Zahnradmitte ($C_2$) übertragen wird, um entsprechen das Zahnrad in Drehung zu versetzen, während die Zahnraddrehung in jeder Richtung eine effektive Kraft ($F'_2$) erzeugt, die sich nahe der Ritzelmittel ($C_1$) befindet, um keine entsprechende Ritzeldrehung zu erzeugen.

2. Vorrichtung nach Anspruch 1, **dadurch gekennzeichnet, dass** das Verhältnis ($R_1$) des Außendurchmessers ($da_1$) zum Basisdurchmesser ($db_1$) des Ritzels (8) größer als 6, vorzugsweise größer als 10, ist.

3. Vorrichtung nach Anspruch 1 oder 2, **dadurch gekennzeichnet, dass** das Verhältnis ($R_2$) des Außendurchmessers ($da_2$) zum Basisdurchmesser ($db_2$) des Zahnrads (10) kleiner als 4, vorzugsweise kleiner als 3, ist.

4. Vorrichtung nach einem der vorhergehenden Ansprüche, **dadurch gekennzeichnet, dass** die Zähnezahl ($Z_1$) des Ritzels (8) 1 oder 2 ist.

5. Vorrichtung nach einem der vorhergehenden Ansprüche, **dadurch gekennzeichnet, dass** die Zähnezahl ($Z_2$) des Zahnrads (10) größer als 15, vorzugsweise größer als 20, ist.

6. Vorrichtung nach einem der vorhergehenden Ansprüche, **dadurch gekennzeichnet, dass** der Querdruckwinkel ($\alpha t$), der dem Zahnrad (10) und dem Ritzel (8) gemein ist, größer als 45°, vorzugsweise größer als 60°, ist.

7. Vorrichtung nach einem der vorhergehenden Ansprüche, **dadurch gekennzeichnet, dass** das Ritzel (8) einen Profilverschiebungsfaktor ($x_1$) größer als (+1), vorzugsweise größer als (+2), aufweist.

8. Vorrichtung nach einem der vorhergehenden Ansprüche, **dadurch gekennzeichnet, dass** der Profilverschiebungsfaktor ($X_2$) des Zahnrads (10) kleiner als (-1), vorzugsweise kleiner als (-2) ist.

9. Elektrische Vorrichtung, insbesondere Fensterheber, Sitzverschiebungsantrieb oder Scheibenwischer, **dadurch gekennzeichnet, dass** sie mindestens eine nicht umkehrbare Bewegungsübertragungsgetriebevorrichtung nach einem der vorhergehenden Ansprüche umfasst.

10. Kraftfahrzeug mit mindestens einer elektrischen Vorrichtung nach dem vorhergehenden Anspruch.


**Revendications**

1. Dispositif de transmission de mouvement irréversible par engrenage, comprenant un carter (2) supportant un moyen d'entrée (4) et un moyen de sortie (6), une extrémité du moyen d'entrée étant munie d'un pignon (8) tandis qu'une extrémité du moyen de sortie est munie d'une roue d'engrenage (10), ledit pignon et ladite roue d'engrenage constituant un système d'engrenage,

**caractérisé en ce que**

ladite roue d'engrenage et ledit pignon sont conçus d'une telle manière que, pendant le fonctionnement, la rotation du pignon dans l'un ou l'autre sens génère une force effective ($F'_1$) transmise le long d'un chemin écarté du centre de la roue d'engrenage ($C_2$) de manière à entraîner une rotation correspondante de ladite roue d'engrenage, tandis que la rotation de la roue d'engrenage dans l'un ou l'autre sens génère une force effective ($F'_2$) rapprochée du centre du pignon ($C_1$) de manière à ne pas entraîner de rotation correspondante du pignon.

2. Dispositif selon la revendication 1, **caractérisé en ce que** le rapport ($R_1$) du diamètre extérieur ($da_1$) au diamètre de base ($db_1$) du pignon (8) est supérieur à 6, de préférence supérieur à 10.

3. Dispositif selon l'une quelconque des revendications 1 et 2, **caractérisé en ce que** le rapport ($R_2$) du diamètre extérieur ($da_2$) au diamètre de base ($db_2$) de la roue d'engrenage (10) est inférieur à 4, de préférence inférieur à 3.

4. Dispositif selon l'une quelconque des revendications précédentes, **caractérisé en ce que** le nombre de dents ($Z_1$) du pignon (8) est égal à 1 ou 2.

5. Dispositif selon l'une quelconque des revendications précédentes, **caractérisé en ce que** le nombre de dents ($Z_2$) de la roue d'engrenage (10) est supérieur à 15, de préférence supérieur à 20.

6. Dispositif selon l'une quelconque des revendications précédentes, **caractérisé en ce que** l'angle de pression transversale ($\alpha t$) commun à la roue d'engrenage (10) et au pignon (8) est supérieur à 45°, de préférence supérieur à 60°.

7. Dispositif selon l'une quelconque des revendications précédentes, **caractérisé en ce que** le pignon (8) a un coefficient de déport ($x_1$) supérieur à (+1), de préférence supérieur à (+2).

8. Dispositif selon l'une quelconque des revendications précédentes, **caractérisé en ce que** le coefficient de déport ($x_2$) de la roue d'engrenage (10) est inférieur à (-1), de préférence inférieur à (-2).

9. Appareil électrique, en particulier entraînement de fenêtre, entraînement de déplacement d'un siège ou essuie-glace, **caractérisé en ce qu'**il comprend au moins un dispositif de transmission de mouvement irréversible par engrenage selon l'une quelconque des revendications précédentes.

10. Véhicule à moteur comprenant au moins un appareil électrique défini dans la revendication précédente.

*Fig.1*

*Fig.2*

EP 2 118 518 B1

*Fig.3*

EP 2 118 518 B1

*Fig.4*

Fig.5

EP 2 118 518 B1

Fig.6

EP 2 118 518 B1

**Fig.7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10350934 A

**Non-patent literature cited in the description**

- **G. Henriot's.** *Traité théorique et pratique des engrenages*